# EUROPEAN PATENT SPECIFICATION

(11) **EP 3 716 213 B1**
(45) Date of publication and mention of the grant of the patent: **01.12.2021**
(21) Application number: 19382232.7
(22) Date of filing: 29.03.2019
(51) Int. Cl.: G06T 11/00, G01J 1/00, G09G 3/20, A61B 3/00, G02B 27/01

(54) **METHOD AND DEVICE FOR TREATING IMAGES TO BE VIEWED BY PATIENTS WITH VISUAL PATHOLOGIES**
VERFAHREN UND VORRICHTUNG ZUR BEHANDLUNG VON DURCH PATIENTEN MIT VISUELLEN PATHOLOGIEN ZU BETRACHTENDEN BILDERN
PROCÉDÉ ET DISPOSITIF POUR LE TRAITEMENT D'IMAGES À CONSULTER PAR DES PATIENTS ATTEINTS DE PATHOLOGIES VISUELLES

(43) Date of publication of application: 30.09.2020
(73) Proprietor: Cámara Mena, Rafael, 28040 Madrid (ES)
(72) Inventor: CÁMARA MENA, RAFAEL, 28049 MADRID (ES); BERNÁRDEZ VILABOA, RICARDO, MADRID (ES); ÁLVAREZ FERNÁNDEZ-BALBUENA, ANTONIO, MADRID (ES)
(74) Representative: Isern Patentes y Marcas S.L.

(56) References cited:
- EP-A1- 3 244 252
- WO-A1-03/091946
- US-A1- 2013 215 147

## Description

### OBJECT OF THE INVENTION

The object of the present invention is a method for treating images, which is suitable for protecting the vision of people suffering from visual impairment, as well as for their enhancement and prediagnosis, especially when said visual impairment is due to pathologies that lead to low vision that cannot be improved by means of normal ophthalmological and optometric science, such as glasses, contact lenses, medicines or surgery.

More specifically, the invention proposes a method that modifies the images captured by one or more cameras in order to show them in a suitable manner for the patient on one or more screens, the modification of the images preferably being carried out in real time and at the will of the patient or an optometrist. In turn, a device is claimed that is configured to implement said method, as well as to provide a means of pre-diagnosis or partial diagnosis of the vision of the patient which is sufficient depending on the type of requirements of the patients, being more convenient, quicker and more economical than the use of current complex diagnosis means.

### BACKGROUND OF THE INVENTION

While this is not an academic definition, low vision tends to be defined as a visual condition that remains in the patient after ophthalmological/optometric science has exhausted the common resources, including surgery. In order to try to alleviate low vision, different systems and methods are known in the current state of the art that treat images on screens or apply augmented reality as tools to improve the vision of said patients.

For example, patent documents ES2542804B1 and US2017038607A1 disclose electronic devices for visual aid by projecting video images that are adapted to the active visual field of the user, the devices being mounted on a glasses frame, having a front camera to capture video images and a light emitter behind a liquid crystal screen that projects the captured image to the active area of the user's visual field. They mention that in order to implement the device for the patient, a parameterization of the patient's vision is carried out; however, none of the documents mention the method that the device carried out.

Document US2016270648 discloses a method wherein a visual model is established that is related to the quality of the patient's vision, it establishes a boundary that is indicative of the area to be corrected within the patient's vision, it establishes a retinal map based on the boundary, it receives in a controller an image from a camera to which corrections are applied based on the retinal map and the corrected image is presented in an image display unit to the eye of the patient. Specifically, the corrections to the image comprise moving image data located within the boundary outwards along a plurality of rays starting at a centre point and extending outside of the boundary, such that the image data from the centre point to the edge of the image are compressed in the corrected image from the boundary to the edge of the image. Similarly, document US2018365877 discloses another visual aid method by means of projecting video images adapted to the active visual field of the user, wherein a physical barrier for the external light into the macula area is inserted, leaving the periphery free.

Furthermore, for greater comfort and visual protection depending on the light conditions, people with low vision require physical selective filters that block a percentage of the different wavelengths of visible light. However, the greater impact of digital screens in our day-to-day lives means that a debate has arisen in recent years in the ophthalmic community on whether or not blue light radiation is harmful to sight. Likewise, some research has concluded that looking at a screen at night can not only make it difficult to fall asleep, but also mean that the quality of sleep is not optimal. The spectral range of blue light comprised between wavelengths 460 and 490 nm (which are those that the melanopsin photoreceptors in the eye perceive) has been identified as that which causes sleep problems. The first method implemented on screens to resolve this problem is that known as f.lux ®, which was developed in 2009. However, the popularisation of these types of methods took place in March 2016 when Apple Inc. provided a new adjustable night mode for the screens of their iPad and iPhone models, called Night Shift, and which was copied by their competition. This viewing mode reduces the intensity of the band comprised between 460 and 490 nm so as to not negatively affect night-time sleep, while increasing the intensity of the red (comprised between the band of 580 to 780 nm) to counteract the dominant yellow. Although this spectral distribution can reduce eye strain and be beneficial to sleep, the aim is not to modulate the more energetic wavelengths in general (comprised between 380 and 580 nm), which not only makes it difficult for patients with low vision to see them, but could also damage their retinas.

Documents EP 3 244 252 A1 (FUND TEKNIKER) and US 2013/215147 A1 (HILKES) disclose methods for treating images according, at least partially, to the preamble of claim 1 below.

### DESCRIPTION OF THE INVENTION

The present invention has been developed in order to provide a method for treating images, which is configured as a novelty in the field of optometry, by means of which the vision of patients with visual pathologies is protected and promoted.

The main object of the method of the invention is to show in real time the images obtained by means of one or more cameras, on one or more screens, having modulated the more energetic wavelengths of the image pixels, mainly those comprised between 380 and 580 nm, which is the equivalent of applying a physical filter that reduces the energy received by the patient's retina.

The method is based on the preparation of one or more tables of equivalence that, based on the possible RGB colours distinguishable in a pixel, returns R', G' and B' values corresponding to a colour, which spectral energy is reduced with respect to that of the original RGB colour. From a general perspective of the visible spectrum (that is, without going into detail on near frequency waves), said reduction is in a greater magnitude for higher frequency light waves and in a smaller magnitude for lower frequency light waves. The intention of these tables is to link the more energetic colours with equivalent colours with a spectral distribution that is less energetic (spectral distribution being understood as the distribution of the radiated energy depending on the different frequencies or wavelengths of the emitted light). Whenever possible, linking to the original colours is performed with the corresponding less energetic metameric colours.

By way of non-limiting example, depending on the diverse light situations in which the patient might find themselves, the reductions considered in the tables of equivalence can correspond to any one of the following forms:
- A reduction of 100% for wavelengths less than 410 nm, an increasingly smaller reduction as the wavelength grows to reach a maximum reduction of 90% for wavelengths between 410 nm - 440 nm, a reduction of between 85%
- 90% for wavelengths between 440 nm - 580 nm, an increasingly smaller reduction as the wavelength grows to reach a maximum reduction of 60% for wavelengths between 580 nm - 700 nm and a reduction between 55% - 60% for wavelengths greater than 700 nm.
- A reduction of 100% for wavelengths less than 410 nm, an increasingly smaller reduction as the wavelength grows to reach a maximum reduction of 97% for wavelengths between 410 nm - 430 nm, a reduction of between 95%
- 97% for wavelengths between 430 nm - 530 nm, an increasingly smaller reduction as the wavelength grows to reach a maximum reduction of 75% for wavelengths between 530 nm - 610 nm and a reduction between 60% - 75% for wavelengths greater than 610 nm.
- A reduction of 100% for wavelengths less than 450 nm, an increasingly smaller reduction as the wavelength grows to reach a maximum reduction of 15% for wavelengths between 450 nm -550 nm and a reduction of between 5% - 15% for wavelengths greater than 550 nm.
- A reduction of 100% for wavelengths less than 400 nm, a reduction of between 95% - 100% for wavelengths between 400 nm - 530 nm, an increasingly smaller reduction as the wavelength grows to reach a maximum reduction of 15% for wavelengths between 530 nm - 620 nm and a reduction between 3% - 15% for wavelengths greater than 620 nm.

The four examples above of tables of equivalence correspond to the cutoff curves of the physical selective filters that are mounted on sight correction glasses, which are used for comfort and sight protection of people with pathologies that lead to low vision. As has been commented, these tables are provided by way of example, and can be used by, and provide access for, the patient to intermediate combinations or customised tables of equivalence. A possible case would be, for example, for the value R of a light wave, which is mainly reflected in the spectral band thereof between 580 nm and 780 nm, to be maintained without change because it is considered that its impact on the retina is harmless.

The method itself or only the aforementioned tables of equivalence to be used can be implemented in any video recording system or any screen, through a simple menu, providing the patient with a system that can be implemented in different formats and in different boundary conditions.

As mentioned above, the present invention modifies the most energetic colours to a larger extent than the rest, meaning that the majority of the pixels are almost unchanged and acceptably mask the resulting colour difference for patients with low vision, who already have difficultly perceiving colours. In summary, the present invention differs from current methods in that it provides patients with low vision with digital filters or viewing modes for screens that are equivalent to applying current physical selective filters that are mounted on sight correction glasses. In addition, the present invention enables one viewing mode to be immediately changed to another, in order to compensate for the lighting changes that may take place in day-to-day life and that seriously affect these patients.

In order to show the patient the images with the most energetic wavelengths modulated as described above, the method comprises the stages described below:
- capturing video images with one or more digital cameras, thereby obtaining pixel signals defined by RGB values of the frames of the video images,
- transforming, by means of a processing unit, the RGB values of said signals to R'G'B' values according to a table of equivalence previously installed in the processing unit,
- generating pixel signals corresponding to the frames of the images with colours modified according to said R'G'B' values,
- transmitting the modified-colour images on one or more digital screens.

The above second and third stages can be understood as a single stage, wherein the RGB values of said signals are substituted, by means of a processing unit, for R'G'B' values according to a table of equivalence previously installed in the processing unit, thereby obtaining pixel signals corresponding to the frames of the modified-colour images.

With the transformation in the video images carried out by the present method, an RGB colour is substituted for a new metameric R'G'B' colour of the prior one that comprises the most energetic spectral component filtered or minimised to a larger extent than the rest. Thanks to this transformation, the visually impaired patient can not only see said images with greater comfort, but also with the assurance that their retina will not be damaged further.

As indicated in the previous stages, capturing images can be carried out by more than one camera, and the transmission of the images can be carried out by more than one screen, since it may be the case that it is appropriate to use cameras with different characteristics or that, for example, the method is carried out in an immersive screen system.

In order to make the preparation of the tables of equivalence more manageable and/or require less capacity in the processing unit, the 256 possible G values are grouped into a reduced number of possible values, in the same way as the 256 possible B values, meaning that the processing unit classifies the RGB values of each pixel into one of the possible combinations of G and B. In this case, the R value is not taken into account in order to classify the RGB values, taking advantage of the fact that its energy is not harmful to the retina. In this way, the possible combinations of the RGB values are reduced from 16.7 million to fewer options. When the number of input RGB values of the tables of equivalence is reduced, the number of possible output R'G'B' values are also reduced (or in other words, the colours to be shown on the screens). In any case, although the number of possible colours to be transmitted by the screens has been considerably reduced, it is still an acceptable number of colours for the patients with low vision, who themselves have difficulty seeing colours. For example, the possible G values can be found grouped into 25 value groups, similarly to the 256 possible B values. Then, for the RGB values of each pixel, the processing unit reads its G and B values and classifies said RGB values into one of the 625 possible combinations (25 G groups times 25 B groups). In this case, the tables of equivalence take these 625 combinations as the possible input RGB values and, as a result, there are also 625 possible combinations of output R'G'B' values (which correspond to colours with a less energetic spectral distribution, which are preferably metameric).

With respect to the table of equivalence for carrying out the stage of transforming the RGB values, it can be selected by the patient, by an ophthalmological or optometric specialist, or the method can comprise an additional stage in which the processing unit, depending on the light conditions captured by the cameras, selects the most suitable table of equivalence for the patient, according to instructions previously installed in said processing unit. In a complementary manner, when the selection has been carried out by the processing unit, it emits a signal to the screens to inform the patient that a change in the light received by the cameras has been detected and the table has been changed, whilst automatically showing the corresponding table of equivalence selection menu so that the patient has diligent access to any other table, while continuing to see the modified-colour images, according to the new selected table of equivalence, in the background.

Optionally, the stages of the method can be carried out in real time, such as for examples in a smartphone, when a patient uses the camera in their smartphone, which captures video images and shows them in real time on the screen thereof, but due to the present invention, it would show the images with colours modified in a favourable manner for the patient, as explained above.

Any of the embodiments of the method described above can be carried out in a portable device, also claimed herein as an invention, which is configured to show the patient modified-colour images in front of their eyes without needing to hold any screen in their hands. This device comprises a glasses frame, which supports at least one camera with which to capture video images, a processing unit wherein one or more tables of equivalence are installed and that is suitable for carrying out the transformation of the video images depending on the selected table of equivalence, and at least one screen linked to said processing unit, supported by the same glasses frame and located in front of the user's eyes.

Optionally, the screen or screens of the present device can be transparent such that the patient can decide whether they only want to see the modified-colour images that the camera receives on the entire screen, see only the real images captured by their eyes as if there were no screen, or see the modified-colour images on a section of the screen, while the rest of the screen is transparent or opaque.

Due to this device, the present method for treating images can also comprise one or several stages that favour the vision of patients with visual pathologies, as shall be discussed in detail below. In order to control the position in which the images are shown on the screen, as well as the zoom, brightness, contrast, filter or used tables of equivalence thereof, the device of the present invention can comprise a connection port to connect an external control apparatus, such as a tablet, from which the optometrist can command the device. Alternatively, the device can have wireless communication means to carry out said connection with the external control apparatus. Likewise, the method can comprise a communication stage for communication between the device of the present invention and an external apparatus, configured for the control of the former by the latter. Optionally, the method can also comprise a communication stage for communication with the smartphone or tablet of the patient, and showing the information of the screens thereof on the screens of the device of the present invention.

With respect to the stages that enable vision to be favoured, for example, the stage of the method in which the images are transmitted on the digital screens can be characterised in that the images (whether or not with modified colours) are shown in the section of the screens corresponding to the patient's extrafoveal area, referred to as Trained Retinal Locus (TRL). This stage is suitable when the patient has a macular pathology that affects the central fixation (and therefore the maximum visual acuity, and after a training period directed by an optometrist, reorients the fixation towards said TRL, the retina area being that which provides the greatest possible visual acuity. Therefore, the method can comprise a stage in which an external control apparatus shows the optometrist certain vision parameters of the patient and, by means of the same external control apparatus, the optometrist selects the selection of screens where the images are shown to the patient.

Furthermore, the present method can comprise a stage in which an optometrist, by means of the external control apparatus, indicates to the device to show the images in different sections of the screens while the patient views them and informs the optometrist of the changes detected. The optometrist can therefore compare the vision of the patient in different sections of the screen, such that they have a means of finding the patient's extrafoveal area, referred to as Preferred Retinal Locus (PRL). This stage is suitable when the patient uses said PRL area as a fovea, but which is not the area with greatest possible visual acuity, such that they need training to reorient the fixation towards the TRL zone. As a result of this stage, carried out by the aforementioned device, the optometrist can provide more effective training that is more understandable for the patient, while the patient can carry out the training without having to physically be at the optometrist's facilities. Said stages can serve to achieve a partial diagnosis of PRL and TRL of the patient that, depending on the case, can be sufficient to apply corrections in their vision.

For the pre-diagnosis or partial diagnosis of other possible pathologies, the method can comprise a stage for obtaining certain vision parameters of the patient, consisting of emitting through the screens a template with a black background, divided into sectors, in which light pulses are emitted one by one, so that the patient indicates to the optometrist when and in which sectors they detect the light pulses. For the pre-diagnosis of certain specific pathologies, the emitted template can comprise a diamond in the centre, configured so that the patient focuses their vision on it while the light pulses are emitted. Preferably, the method can comprise an adjustment stage wherein the optometrist adjusts the light and/or rate at which the light pulses are emitted by the external control apparatus. Preferably, the external control device or apparatus comprise a connection port to which a push button is connected, with which the registration of the moment at which the patient indicates that they have detected a light pulse is more accurate. Likewise, the method can comprise a communication stage for communication between the device of the present invention or the external control device and the push button.

For both the pre-diagnosis of some possible pathologies and for the testing itself of certain aspects of sight by the patient at any time and place, the method may comprise a stage consisting of emitting through the screens of the device an Amsler grid with a transparent background, such that the patient can see their surroundings through said grid. Currently, the Amsler grid test takes place in the surroundings of an ophthalmic clinic or at the patient's home, hanging the Amsler grid one metre away, or 50 cm if a computer screen is used. Instead, due to the present invention, the patient can do the test at any time and in any situation, thus increasing the pre-diagnosis options. Furthermore, the inventors of the present invention are discovering additional advantages of carrying out the Amsler grid test with augmented reality, with real depth vision.

In summary, the present invention provide means for protecting and favouring sight for patients with visual pathologies, as well as pre-diagnosis and partial diagnosis means of sight that are faster and more economical than currently existing means.

### BRIEF DESCRIPTION OF THE DRAWINGS

Figure 1 shows a flow diagram with the stages of the preferred embodiment of the method of the present invention.
Figure 2 is an exemplary graph of the percentage reductions applied to the light waves of the images to be transmitted according to one of the tables of equivalence.
Figure 3 is a representation of the exemplary embodiment of the device of the present invention.

### BRIEF DESCRIPTION OF A PREFERRED EMBODIMENT

In light of the aforementioned figures, a preferred exemplary embodiment of the invention can be seen therein, comprising the parts and elements that are indicated and described in detail below.

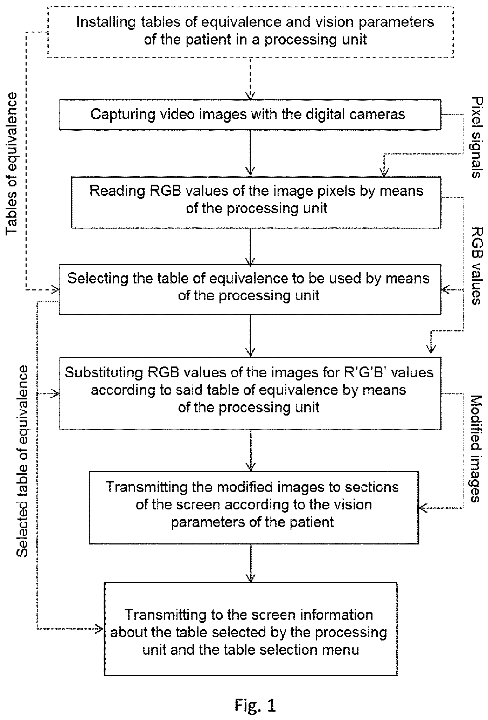

As shown in Fig. 1, the preferred embodiment of the present method for treating images to be viewed by patients with visual pathologies is based on the preparation and installation in a processing unit of tables of equivalence, preferably four, each one of which, based on the possible RGB colours distinguishable in a pixel, returns R'G'B' values corresponding to a colour which spectral energy is reduced with respect to that of the original RGB colour. Likewise, the vision parameters of the patient, which are previously obtained with the participation of an optometrist, are installed. As can be seen, the box for this stage is outlined in a dashed line as this stage is not claimed as part of the method since it is carried out before it is put into practice. The dashed arrows on the sides refer to the main information that is transferred from one stage to another.

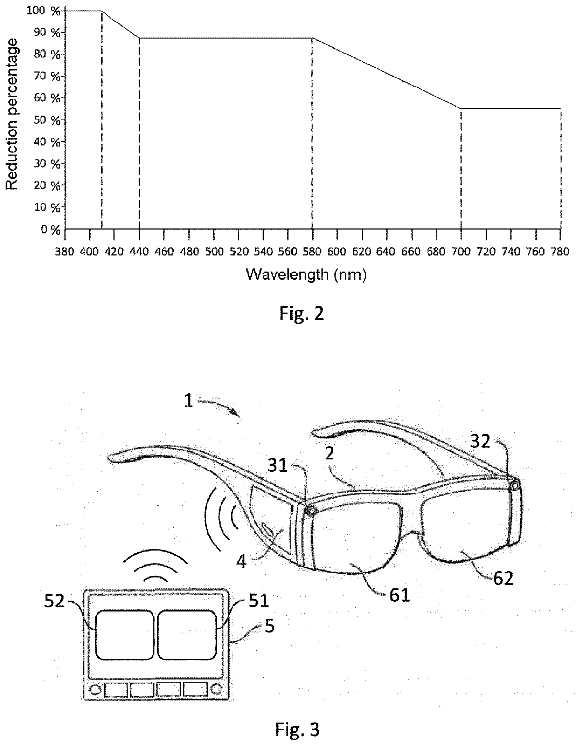

Fig. 2 shows, by way of example, the percentage reductions applied to the light waves of the images to be transmitted according to one of said tables of equivalence installed in the processing unit. As can be seen, the table of equivalence corresponding to this exemplary graph would apply a reduction of 100% for wavelengths less than 410 nm, an increasingly smaller reduction as the wavelength grows to reach a maximum reduction of 90% for wavelengths between 410 nm - 440 nm, a reduction of between 85% - 90% for wavelengths between 440 nm - 580 nm, an increasingly smaller reduction as the wavelength grows to reach a maximum reduction of 60% for wavelengths between 580 nm - 700 nm and a reduction between 55% - 60% for wavelengths greater than 700 nm. From a general perspective of the visible spectrum, said reductions are greater for higher frequency light waves and smaller for lower frequency light waves. The intention of this and the other tables of equivalence is to link the most energetic colours with equivalent colours which spectral distribution is less energetic and does not damage the patient's retina.

The following stage shown in Fig. 1 corresponds to the initial stage of putting the method of the present invention into practice, consisting of capturing images with digital cameras, thereby obtaining pixel signals defined by RGB values of the frames of the video images.

The following stage of the preferred embodiment consists of evaluating, by means of the processing unit, the light of the captured images, to subsequently select the table of equivalence to then be used.

Then, the processing unit, depending on the selected table of equivalence, substitutes the RGB values of said signals for R'G'B' values defined in said table of equivalences, and thereby obtain the pixel signals of the corresponding frames of the modified-colour images.

Lastly, the modified-colour images are transmitted to the digital screens, as well as the information on the table selected by the processing unit and the table selection menu, if the patient prefers to select another table.

Fig. 3 shows an exemplary embodiment of the device (1) for treating images to be viewed by patients with visual pathologies, which comprises a glasses frame (2), which supports two cameras (31, 32) with which the video images are captured, a processing unit (4), which includes wireless communication means for communicating with external apparatuses (5), two screens (61, 62) linked to said processing unit (4) and supported by the same glasses frame (2). In this exemplary embodiment, the external apparatus (5) consists of a tablet, which is configured to communicate with the device (1), wherein copies (51, 52) of the images viewed on the screens (61, 62) are shown and through which an optometrist can select the selection of screens (61, 62) where the images to be treated are shown.

The details, shapes, dimensions and other accessory elements of the present invention may be suitably substituted for others which are technically equivalent, and do not diverge from the scope defined by the claims included below.

## Claims

1. A computer-implemented method for treating images to be viewed by patients with visual pathologies, the method comprising the stages of:
- capturing video images with one or more digital cameras (31, 32), thereby obtaining pixel signals defined by RGB values of the frames of the video images,
- substituting, by means of a processing unit (4), the RGB values for R'G'B' values according to a table of equivalence previously installed in the processing unit (4), thereby obtaining pixel signals corresponding to the frames of the modified-colour images,
- transmitting the modified-colour images on one or more digital screens (61, 62),
wherein the table of equivalence according to which the substitution of the RGB values for R'G'B' values consists of a table that, based on possible RGB values distinguishable in a pixel, returns R'G'B' values corresponding to a colour which spectral energy is reduced with respect to that of the original RGB colour, through a spectral-energy reduction wherein the reduction has greater magnitude for an original colour corresponding to the higher frequencies than an original colour corresponding to the lower frequencies of the visible spectrum.
**the method being characterized in that** the 256 possible G values are grouped into a reduced number of possible values, in the same way as the 256 possible B values, so that the processing unit (4) classifies the RGB values of each pixel into one of the possible combinations of G and B, without taking into account the R value, and said possible combinations of G and B being the input values of the tables of equivalence.

2. The method according to claim 1, **characterised in that** the processing unit (4) has more than one table of equivalence installed and the method comprises a stage for selecting the table of equivalence to be used.

3. The method according to claim 2, **characterised in that** the stage for selecting the table of equivalence to be used is carried out by the processing unit (4) depending on the light captured by the digital cameras (31, 32) and according to instructions previously installed in said processing unit (4).

4. The method according to claim 3, **characterised in that**, when the selection has been carried out by the processing unit (4), said processing unit (4) emits a signal to the screens (61, 62) to inform the patient that a change in the light received by the cameras (31, 32) has been detected and the table of equivalence has been changed, whilst showing the corresponding table of equivalence selection menu, while continuing to show the modified-colour images, according to the new selected table of equivalence.

5. The method according to any of the preceding claims, **characterised in that** the processing unit (4) transmits the modified-colour images to the digital screens (61, 62) in real time.

6. The method according to the preceding claims, **characterised in that** the modified-colour images are transmitted to one or more transparent screens installed on a glasses frame (2), in front of the patient's eye.

7. The method according to claim 6, **characterised in that** the modified-colour images are only shown in a section of the transparent screens and the remaining section stays transparent.

8. The method according to any of claims 5 to 7, **characterised in that** it comprises a stage consisting of emitting through the transparent screens an Amsler grid with a transparent background, such that the patient can see their surroundings through said grid.

9. - A device (1) for treating images to be viewed by patients with visual pathologies, comprising a glasses frame which supports at least one camera (31, 32) which captures video images, a processing unit (4) and at least one screen (61, 62) linked to said processing unit, supported by the same glasses frame and located in front of the user's eyes, wherein the processing unit is configured to carry out the step of the method of any of claims 1- 8.

10. The device (1) according to claim 9, **characterised in that** it comprises wireless communication means to communicate with external apparatuses (5).

## Patentansprüche

1. Computerimplementiertes Verfahren zur Behandlung von Bildern, die von Patienten mit visuellen Pathologien betrachtet werden sollen, wobei das Verfahren die folgenden Stufen umfasst:
- Aufnehmen von Videobildern mit einer oder mehreren Digitalkameras (31, 32), wodurch Pixelsignale erhalten werden, die durch RGB-Werte der Rahmen der Videobilder definiert sind,
- Ersetzen, mittels einer Verarbeitungseinheit (4), der RGB-Werte durch R'G'B'-Werte gemäß einer zuvor installierten Äquivalenztabelle in der Verarbeitungseinheit (4), wodurch Pixelsignale erhalten werden, die den Rahmen der farbmodifizierten Bilder entsprechen,
- Übertragen der farbmodifizierten Bilder auf einen oder mehrere digitale Bildschirme (61, 62), wobei die Äquivalenztabelle, gemäß der die Ersetzung der RGB-Werte durch R'G'B'-Werte aus einer Tabelle besteht, die basierend auf möglichen RGB-Werten, die in einem Pixel unterscheidbar sind, R'G'B'-Werte zurückgibt, die einer Farbe entsprechen, deren spektrale Energie gegenüber derjenigen der ursprünglichen RGB-Farbe durch eine spektrale Energieverringerung verringert ist, wobei die Verringerung für eine ursprüngliche Farbe, die höheren Frequenzen entspricht, eine größere Größe aufweist als eine ursprüngliche Farbe, die den niedrigeren Frequenzen des sichtbaren Spektrums entspricht,
**wobei das Verfahren dadurch gekennzeichnet ist, dass** 256 mögliche G-Werte auf die gleiche Weise wie die 256 möglichen B-Werte in eine reduzierte Anzahl möglicher Werte gruppiert werden, so dass die Verarbeitungseinheit (4) die RGB-Werte jedes Pixels in eine der möglichen Kombinationen von G und B einstuft, ohne den R-Wert zu berücksichtigen, und die möglichen Kombinationen von G und B die Eingabewerte der Äquivalenztabellen sind.

2. Verfahren nach Anspruch 1, **dadurch gekennzeichnet, dass** in der Verarbeitungseinheit (4) mehr als eine Äquivalenztabelle installiert ist und das Verfahren eine Stufe zum Auswählen der zu verwendenden Äquivalenztabelle umfasst.

3. Verfahren nach Anspruch 2, **dadurch gekennzeichnet, dass** die Stufe zum Auswählen der zu verwendenden Äquivalenztabelle von der Verarbeitungseinheit (4) in Abhängigkeit von dem von den Digitalkameras (31, 32) aufgenommenen Licht und gemäß Anweisungen durchgeführt wird, die zuvor in der Verarbeitungseinheit (4) installiert wurden.

4. Verfahren nach Anspruch 3, **dadurch gekennzeichnet, dass**, wenn die Auswahl von der Verarbeitungseinheit (4) durchgeführt wurde, die Verarbeitungseinheit (4) ein Signal an die Bildschirme (61, 62) emittiert, um den Patienten darüber zu informieren, dass eine Änderung des von den Kameras (31, 32) empfangenen Lichts erkannt und die Äquivalenztabelle geändert wurde, während das entsprechende Menü zur Auswahl der Äquivalenztabelle gezeigt wird, während weiterhin die farbmodifizierten Bilder gemäß der neu ausgewählten Äquivalenztabelle angezeigt werden.

5. Verfahren nach einem der vorhergehenden Ansprüche, **dadurch gekennzeichnet, dass** die Verarbeitungseinheit (4) die farbmodifizierten Bilder in Echtzeit auf die digitalen Bildschirme (61, 62) überträgt.

6. Verfahren nach den vorhergehenden Ansprüchen, **dadurch gekennzeichnet, dass** die farbmodifizierten Bilder auf einen oder mehrere transparente Bildschirme übertragen werden, die auf einem Brillengestell (2) vor dem Auge des Patienten installiert sind.

7. Verfahren nach Anspruch 6, **dadurch gekennzeichnet, dass** die farbmodifizierten Bilder nur in einem Abschnitt der transparenten Bildschirme angezeigt werden und der verbleibende Abschnitt transparent bleibt.

8. Verfahren nach einem der Ansprüche 5 bis 7, **dadurch gekennzeichnet, dass** es eine Stufe umfasst, die aus dem Emittieren, durch die transparenten Bildschirme, eines Amsler-Gitters mit einem transparenten Hintergrund besteht, so dass der Patient seine Umgebung durch dieses Gitter sehen kann.

9. Vorrichtung (1) zum Behandeln von Bildern, die von Patienten mit visuellen Pathologien betrachtet werden sollen, umfassend ein Brillengestell, das mindestens eine Kamera (31, 32) stützt, die Videobilder aufnimmt, eine Verarbeitungseinheit (4) und mindestens einen Bildschirm (61) 62), der mit der Verarbeitungseinheit verbunden ist, die von demselben Brillengestell gestützt wird und sich vor den Augen des Benutzers befindet, wobei die Verarbeitungseinheit konfiguriert ist, um den Schritt des Verfahrens nach einem der Ansprüche 1 bis 8 durchzuführen.

10. Vorrichtung (1) nach Anspruch 9, **dadurch gekennzeichnet, dass** sie drahtlose Kommunikationsmittel zur Kommunikation mit externen Geräten (5) umfasst.

## Revendications

1. Procédé mis en œuvre par ordinateur pour traiter des images devant être visualisées par des patients présentant des pathologies visuelles, le procédé comprenant les étapes consistant à :
- capturer des images vidéo avec une ou plusieurs caméras numériques (31, 32), obtenant ainsi des signaux de pixel définis par les valeurs RVB des trames des images vidéo,
- remplacer, au moyen d'une unité de traitement (4), les valeurs RVB des valeurs R'V'B' selon un tableau d'équivalence préalablement installé dans l'unité de traitement (4), obtenant ainsi des signaux de pixel correspondant aux trames des images aux couleurs modifiées,
- transmettre les images aux couleurs modifiées sur un ou plusieurs écrans numériques (61, 62),
dans lequel le tableau d'équivalence selon lequel la substitution des valeurs RVB pour les valeurs R'V'B consiste en un tableau qui, sur la base d'éventuelles valeurs RVB distinguables dans un pixel, renvoie les valeurs R'V'B' correspondant à une couleur dont l'énergie spectrale est réduite par rapport à celle de la couleur RVB d'origine, à travers une réduction d'énergie spectrale dans lequel la réduction a une amplitude plus grande pour une couleur d'origine correspondant aux fréquences plus élevées qu'une couleur d'origine correspondant aux fréquences plus faibles du spectre visible,
**le procédé étant caractérisé en ce que** les 256 valeurs V possibles sont regroupées en un nombre réduit de valeurs possibles, de la même manière que les 256 valeurs B possibles, de sorte que l'unité de traitement (4) classe les valeurs RVB de chaque pixel dans l'une des combinaisons possibles de V et B, sans tenir compte de la valeur R, et lesdites combinaisons possibles de V et B étant les valeurs d'entrée des tableaux d'équivalence.

2. Procédé selon la revendication 1, **caractérisé en ce que** l'unité de traitement (4) a plus d'un tableau d'équivalence installé et le procédé comprend une étape de sélection du tableau d'équivalence à utiliser.

3. Procédé selon la revendication 2, **caractérisé en ce que** l'étape de sélection du tableau d'équivalence à utiliser est effectuée par l'unité de traitement (4) en fonction de la lumière captée par les caméras numériques (31, 32) et selon des instructions préalablement installées dans ladite unité de traitement (4).

4. Procédé selon la revendication 3, **caractérisé en ce que**, lorsque la sélection a été effectuée par l'unité de traitement (4), ladite unité de traitement (4) émet un signal vers les écrans (61, 62) pour informer le patient qu'une modification de la lumière reçue par les caméras (31, 32) a été détectée et que le tableau d'équivalence a été modifié, en affichant en même temps le tableau correspondant du menu de sélection d'équivalence, tout en continuant à afficher les images aux couleurs modifiées, selon le nouveau tableau d'équivalence sélectionné.

5. Procédé selon l'une quelconque des revendications précédentes, **caractérisé en ce que** l'unité de traitement (4) transmet les images aux couleurs modifiées aux écrans numériques (61, 62) en temps réel.

6. Procédé selon les revendications précédentes, **caractérisé en ce que** les images aux couleurs modifiées sont transmises à un ou plusieurs écrans transparents installés sur une monture de lunettes (2), devant l'œil du patient.

7. Procédé selon la revendication 6, **caractérisé en ce que** les images aux couleurs modifiées ne sont montrées que dans une section des écrans transparents et la section restante reste transparente.

8. Procédé selon l'une quelconque des revendications 5 à 7, **caractérisé en ce qu'**il comprend une étape consistant à émettre à travers les écrans transparents une grille d'Amsler avec un fond transparent, de telle sorte que le patient peut voir son environnement à travers ladite grille.

9. Dispositif (1) pour traiter des images devant être visualisées par des patients présentant des pathologies visuelles, comprenant une monture de lunettes qui supporte au moins une caméra (31, 32) qui capture des images vidéo, une unité de traitement (4) et au moins un écran (61, 62) relié à ladite unité de traitement, supporté par la même monture de lunettes et situé devant les yeux de l'utilisateur, dans lequel l'unité de traitement est configurée pour effectuer l'étape du procédé selon l'une quelconque des revendications 1 à 8.

10. Dispositif (1) selon la revendication 9, **caractérisé en ce qu'**il comprend des moyens de communication sans fil pour communiquer avec des appareils externes (5).
